# FASCICULE DE BREVET EUROPEEN

(11) **EP 1 970 537 B1**
(45) Date de publication et mention de la délivrance du brevet: **16.12.2009**
(21) Numéro de dépôt: 08151618.9
(22) Date de dépôt: 19.02.2008
(51) Int. Cl.: F01D 5/30, F01D 11/02, F04D 29/32

(54) **Soufflante de turbomachine**
Gebläse eines Turbotriebwerks
Turbomachine fan

(30) Priorité: 16.03.2007 FR 0701903
(43) Date de publication de la demande: 17.09.2008
(73) Titulaire: Snecma, 75015 Paris (FR)
(72) Inventeur: Pierrot, Arnaud Jean-Marie, 77350, LE MEE SUR SEINE (FR); Rousselin, Stéphane, 77850 HERICY (FR)
(74) Mandataire: Ramey, Daniel

(56) Documents cités:
- EP-A- 1 209 322
- EP-A- 1 746 249
- WO-A-93/21425
- FR-A- 2 715 968
- FR-A- 2 814 495

## Description

La présente invention concerne une soufflante d'une turbomachine, telle qu'un turboréacteur ou un turbopropulseur d'avion.

De façon connue, une soufflante de turbomachine comprend un disque de rotor portant une pluralité d'aubes dont les pieds sont engagés et retenus dans des rainures sensiblement axiales formées à la périphérie du disque. Ces aubes sont associées à leurs extrémités radialement internes à des plates-formes qui délimitent intérieurement la veine annulaire d'écoulement du flux d'air entrant dans la turbomachine.

Chaque aube de la soufflante peut être formée d'une seule pièce avec une plate-forme. L'aube est dans ce cas relativement lourde, ce qui se traduit en fonctionnement par des contraintes mécaniques importantes au niveau du pied d'aube, pouvant provoquer l'apparition de criques ou de fissures sur ce pied. De plus la perte d'une aube de soufflante de ce type entraîne des dégâts importants dans la turbomachine, et augmente considérablement le balourd de la soufflante.

Les aubes et les plates-formes de soufflante peuvent également être indépendantes les unes des autres. Les plates-formes, appelées plates-formes inter-aubes, sont alors chacune rapportée et fixée sur le disque de soufflante entre deux aubes adjacentes. Chaque plate-forme comprend des brides radiales internes fixées sur des brides correspondantes du disque au moyen de plusieurs systèmes du type vis/écrou ou pions montés dans des orifices des brides des plates-formes et des orifices correspondants des brides du disque. Ces aubes ne sont pas liées aux plates-formes ce qui permet de réduire notablement les contraintes mécaniques auxquels sont soumis les pieds d'aubes en fonctionnement. Il est alors possible de diminuer la taille des pieds d'aubes pour alléger la soufflante et augmenter ainsi les performances de la turbomachine. De plus, en cas de perte d'une aube de soufflante, les deux plates-formes situées de part et d'autre de l'aube restent en place sur le disque et n'engendrent aucune détérioration supplémentaire dans la turbomachine. Ces deux plates-formes permettent en outre de protéger les aubes de soufflante environnantes en empêchant les débris de l'aube perdue de venir au contact des extrémités radialement internes des aubes.

Cependant, si l'utilisation de plates-formes inter-aubes est avantageuse pour les raisons précédemment évoquées, la fixation de ces plates-formes par l'intermédiaire de systèmes du type vis/écrou ou pions s'avère difficile voire impossible à réaliser pour des petits moteurs de l'ordre de 1 m de diamètre. En effet, les systèmes de fixation du type vis/écrou sont très encombrants et ne peuvent pas être utilisés dans un moteur de faible diamètre. De plus, l'intervalle entre deux aubes de soufflante adjacentes et l'espace situé radialement à l'intérieur de la plate-forme ne sont pas suffisants pour pouvoir manipuler les outils nécessaires au serrage de ces systèmes de fixation. Les fabricants sont ainsi contraints d'utiliser dans les moteurs de faible diamètre des aubes comportant des plates-formes intégrées.

Le document EP-A2-1746249 décrit un disque de soufflante comportant une pluralité d'aubes insérées dans des rainures de la périphérie du disque et des plates-formes inter-aubes fixées entre les rainures du disque.

L'invention a notamment pour but d'apporter une solution simple, économique et efficace à ces différents problèmes, en permettant notamment l'utilisation de plates-formes inter-aubes dans des moteurs de petit diamètre.

Elle propose à cet effet une soufflante de turbomachine, comprenant une pluralité d'aubes dont les pieds sont montés dans des rainures en périphérie d'un disque de rotor, et des plates-formes inter-aubes comportant des brides radiales de fixation sur des brides correspondantes du disque, entre les rainures de montage des pieds d'aubes, caractérisée en ce que chaque plate-forme est fixée sur le disque au moyen d'une goupille insérée dans des orifices des brides de la plate-forme et dans des orifices correspondants des brides du disque.

Selon l'invention, chaque plate-forme inter-aubes est fixée sur le disque par l'intermédiaire d'une pièce unique qui s'étend sensiblement sur toute la dimension axiale de la plate-forme et qui est engagée sensiblement axialement depuis l'amont ou l'aval dans des orifices des brides de la plate-forme et des orifices correspondants des brides du disque. Le montage de la goupille est réalisé depuis l'amont ou l'aval de la soufflante et ne nécessite pas la manipulation d'un outil spécifique dans l'espace situé radialement à l'intérieur de la plate-forme. On peut ainsi utiliser des plates-formes inter-aubes sur tout type de moteur, y compris ceux de petit diamètre.

Chacune de ces plates-formes peut comprendre une bride radiale à chacune de ses extrémités amont et aval.

Avantageusement, chaque plate-forme est en appui axial et radial à son extrémité amont sur une bride amont du disque, et à son extrémité aval sur une bride d'un flasque annulaire aval rapporté et fixé sur le disque.

Les appuis amont et aval de la plate-forme sur le disque et sur le flasque annulaire, respectivement, assurent le positionnement correct de la plate-forme sur le disque et permettent de s'assurer que les orifices des brides de la plate-forme sont bien alignés avec les orifices des brides du disque et du flasque annulaire.

Préférentiellement, la goupille est insérée depuis l'amont dans des orifices des brides de la plate-forme et du disque et comprend à son extrémité amont une tête qui est maintenue appliquée sur la bride amont de la plate-forme au moyen d'un flasque annulaire amont rapporté et fixé sur le disque.

La goupille est ainsi immobilisée axialement par appui axial sur le flasque amont et sur la bride amont de la plate-forme. Cette immobilisation ne nécessite pas l'utilisation d'un outillage spécifique.

En position de montage, la goupille s'étend preferentiellement en oblique par rapport à l'axe de rotation du disque. Elle peut par exemple s'étendre en aval vers l'extérieur.

L'invention concerne également une turbomachine, telle qu'un turboréacteur d'avion, caractérisée en ce qu'elle comprend une soufflante du type décrit ci-dessus.

L'invention concerne encore une goupille de fixation d'une plate-forme inter-aubes sur un disque d'une soufflante telle que décrite précédemment, caractérisée en ce qu'elle comprend un corps de forme rectiligne allongée sensiblement cylindrique qui est relié à une extrémité à une tête de plus grand diamètre ou dimension transversale que celui du corps.

La goupille peut être réalisée dans un matériau léger et résistant tel que du titane ou un composite.

L'invention sera mieux comprise et d'autres détails, avantages et caractéristiques de l'invention apparaîtront à la lecture de la description suivante faite à titre d'exemple non limitatif, et en référence aux dessins annexés dans lesquels :
- la figure 1 est une demi-vue schématique partielle en coupe axiale d'une soufflante de turbomachine selon l'invention ;
- la figure 2 est une vue schématique en perspective d'une plate-forme inter-aubes de la soufflante de la figure 1, vue de l'amont et de côté ;
- la figure 3 est une vue schématique en perspective du disque de la soufflante de la figure 1, vu de l'amont et de côté ;
- la figure 4 est une autre vue schématique en perspective du disque de soufflante de la figure 1, vu de l'amont, et illustre une étape d'assemblage de cette soufflante.

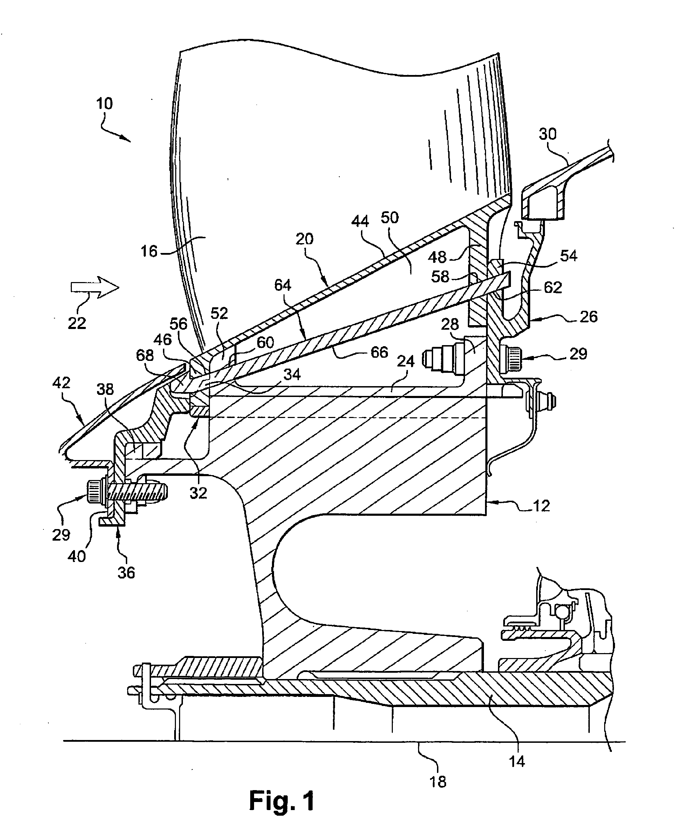

On se réfère d'abord à la figure 1 qui représente de manière schématique une soufflante 10 de turbomachine comprenant un disque 12 qui est monté à l'extrémité amont d'un arbre 14 de turbine et qui porte à sa périphérie une pluralité d'aubes 16 régulièrement réparties autour de l'axe 18 de rotation de la soufflante et entre lesquelles sont montées des plates-formes 20 inter-aubes.

Les aubes 16 sont entourées extérieurement par une nacelle (non représentée) qui définit avec les plates-formes 20 une veine annulaire d'écoulement du flux d'air 22 entrant dans la turbomachine.

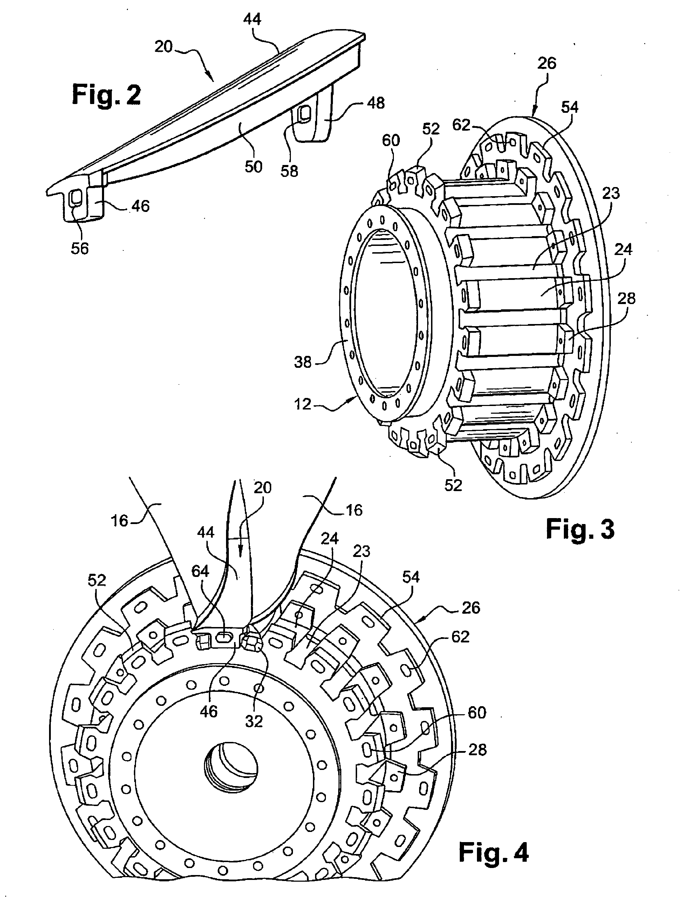

Le disque 12 comprend à sa périphérie une alternance de rainures 23 et de nervures 24 s'étendant longitudinalement sur toute la longueur du disque 12 (figure 3). Les aubes 16 comprennent à leurs extrémités radialement internes des pieds qui sont engagés axialement depuis l'amont dans les rainures 23 du disque et qui coopèrent par liaison de formes avec ces rainures 23 afin d'assurer la retenue radiale des aubes 16 sur le disque 12. Les pieds d'aubes sont par exemple en forme de queue d'aronde.

Les aubes 16 sont retenues axialement vers l'aval par un flasque annulaire 26 rapporté et fixé sur la face aval du disque 12. Dans l'exemple représenté, le flasque 26 est fixé sur des brides aval 28 radialement externes du disque 12 par l'intermédiaire de moyens du type vis/écrou 29. Ce flasque aval 26 coopère à étanchéité à son extrémité radialement externe avec un carter interne 30 de la soufflante qui est aligné avec les plates-formes inter-aubes 20.

Une cale 32 est insérée axialement depuis l'amont entre le pied d'aube et le fond de la rainure 23 pour immobiliser radialement l'aube 16 sur le disque 12 (figures 1 et 4). Cette cale 32 comprend à son extrémité amont un rebord radial 34 qui est en appui axial sur l'extrémité amont du pied d'aube pour assurer la retenue axiale de l'aube en direction de l'amont. Les cales 32 sont immobilisées axialement au moyen d'un flasque annulaire amont 36 qui est rapporté et fixé sur une face amont du disque 12 et qui prend appui à son extrémité radialement externe sur les rebords radiaux des cales 32. L'extrémité radialement interne du flasque amont 36 est intercalée entre une bride annulaire 38 du disque de soufflante, située en aval, et une bride annulaire 40 du cône d'entrée 42 de la turbomachine, située en amont, et est serrée entre ces brides 38, 40, par des moyens du type vis/écrou 29. Le cône d'entrée 42 est aligné avec les plates-formes inter-aubes 20.

Chaque plate-forme 20 comprend une paroi 44 à orientation sensiblement circonférentielle et deux brides radiales 46, 48, respectivement amont et aval, qui s'étendent radialement vers l'intérieur depuis la surface interne de la paroi 44. Les deux brides 46, 48, sont reliées entre elles par au moins une nervure longitudinale 50 de renfort qui s'étend depuis la bride amont 46 jusqu'à la bride aval 48 sur la surface interne de la paroi 44 (figure 2).

Chaque plate-forme 20 est positionnée sur une nervure 24 du disque 12, entre deux aubes 16 adjacentes, et est en appui axial et radial sur une bride amont 52 radialement externe du disque 12 et sur une bride 54 radialement externe portée par le flasque aval 26. Plus précisément, les brides 46, 48 de la plate-forme 20 sont en appui axial en direction de l'aval sur les brides 52, 54 du disque 12 et du flasque aval 26, la paroi 44 ou la nervure 50 de la plate-forme 20 est en appui radial à son extrémité amont sur l'extrémité radialement externe de la bride amont 52 du disque 12, et la nervure 50 de la plate-forme 20 est en appui radial à son extrémité aval sur l'extrémité radialement externe de la bride 54 du flasque aval 26. Ces appuis assurent un positionnement correct de la plate-forme 20 sur la nervure 24 du disque 12, et un alignement axial des orifices 56, 58 des brides de la plate-forme 20 avec des orifices 60, 62 des brides du disque 12 et du flasque aval 26 (figure 1).

Selon l'invention, la plate-forme 20 est immobilisée sur la nervure 24 du disque 12 au moyen d'une goupille 64 qui est engagée sensiblement axialement depuis l'amont dans les orifices 56, 58 des brides de la plate-forme 20 et les orifices 60, 62 des brides du disque 12 et du flasque aval 26.

Cette goupille 64 comprend un corps 66 de forme rectiligne allongée qui est sensiblement cylindrique et destiné à s'étendre à travers les orifices 56, 58, 60, 62, précités, radialement à l'intérieur de la plate-forme 20. Dans l'exemple représenté, la goupille 64 et inclinée par rapport à l'axe 18 de rotation de la soufflante 10, et s'étend en aval vers l'extérieur.

Le corps 66 de la goupille 64 est relié à son extrémité amont à une tête 68 de plus grand diamètre ou de plus grande dimension transversale que celui du corps 66, cette tête 68 comportant une face radiale orientée vers l'aval et destinée à venir en butée sur la face amont de la bride 46 de la plate-forme 20 pour assurer la retenue axiale vers l'amont de la plate-forme 20. La tête 68 de la goupille 64 est immobilisée dans cette position au moyen du flasque amont 36 qui prend appui à son extrémité radialement externe sur l'extrémité amont de la tête 68 de la goupille 64.

La soufflante 10 selon l'invention est assemblée de la manière suivante : le flasque aval 26 est fixé sur le disque 12 par l'intermédiaire des moyens 29 du type vis/écrou (figure 3). Les pieds des aubes 16 sont ensuite engagés axialement depuis l'amont dans les rainures 23 du disque jusqu'à ce que les aubes 16 viennent en butée sur le flasque aval 26. Les cales 32 sont alors insérées sous les pieds d'aubes pour immobiliser radialement les aubes 16 sur le disque 12 (figure 4). Les plates-formes 20 sont ensuite montées sur les nervures 24 du disque 12. Chaque plate-forme 20 peut être amenée au-dessus d'une nervure 24 du disque 12 puis déplacée radialement vers l'intérieur jusqu'à ce que la plate-forme 20 soit en appui axial et radial sur la bride amont 52 du disque 12 et sur la bride 54 du flasque aval 26. La goupille 64 est engagée sensiblement axialement depuis l'amont à travers les orifices 56, 58 des brides 46, 48 de la plate-forme 20 et les orifices 60, 62 des brides du disque 12 et du flasque 26, jusqu'à ce que la tête 68 amont de la goupille 64 vienne en butée sur la face amont de la bride amont 46 de la plate-forme 20 (figures 1 et 4). Le flasque 36 amont est alors rapporté et fixé sur la bride amont 38 du disque 12 pour assurer le verrouillage de l'ensemble (figure 1).

Si l'utilisation d'une soufflante 10 selon l'invention se révèle particulièrement intéressante pour les petits moteurs, elle peut être également utilisée pour les gros moteurs. Dans ce but, on peut prévoir une ou plusieurs brides radiales supplémentaires sur la plate-forme 20 et des brides radiales correspondantes sur la nervure 24 du disque 12, ces brides comportant des orifices traversés par la goupille 64. Ceci permet de limiter les mouvements de flexion de la plateforme 20 lors du fonctionnement de la turbomachine.

Le disque 12 et le flasque annulaire 26 aval peuvent être réalisés d'une seule pièce.

La plate-forme 20 peut être réalisée dans un matériau identique à celui des aubes 16 par exemple en métal, ou bien dans un matériau léger et résistant tel que du composite ou un titane.

## Revendications

1. Soufflante (10) de turbomachine, comprenant une pluralité d'aubes (16) dont les pieds sont montés dans des rainures (23) en périphérie d'un disque (12) de rotor, et des plates-formes (20) inter-aubes comportant des brides radiales de fixation sur des brides correspondantes du disque (12), entre les rainures (23) de montage des pieds d'aubes, **caractérisée en ce que** chaque plate-forme (20) est fixée sur le disque (12) au moyen d'une goupille (64) insérée dans des orifices des brides de la plate-forme (20) et dans des orifices correspondants des brides du disque (12).

2. Soufflante (10) selon la revendication 1, **caractérisée en ce que** chaque plate-forme (20) comprend une bride radiale à chacune de ses extrémités amont et aval.

3. Soufflante (10) selon la revendication 1 ou 2, **caractérisée en ce que** chaque plate-forme (20) est en appui axial et radial à son extrémité amont sur une bride amont (52) du disque (12).

4. Soufflante (10) selon l'une des revendications précédentes, **caractérisée en ce que** chaque plate-forme (20) est en appui axial et radial à son extrémité aval sur une bride (54) d'un flasque annulaire aval (26) rapporté et fixé sur le disque (12).

5. Soufflante (10) selon l'une des revendications précédentes, **caractérisée en ce que** la goupille (64) est insérée depuis l'amont dans des orifices (56, 58, 60, 62) des brides (46, 48, 52, 54) de la plate-forme (20) et du disque (12) et comprend à son extrémité amont une tête (68) qui est appliquée et serrée sur une bride amont (46) de la plate-forme (20) au moyen d'un flasque annulaire amont (36) rapporté et fixé sur le disque (12).

6. Soufflante (10) selon l'une des revendications précédentes, **caractérisée en ce que**, en position de montage, la goupille (64) s'étend en oblique par rapport à l'axe de rotation (18) du disque (12).

7. Soufflante (10) selon la revendication 6, **caractérisée en ce que** la goupille (64) s'étend en aval vers l'extérieur.

8. Turbomachine, telle qu'un turboréacteur ou un turbopropulseur d'avion, **caractérisée en ce qu'**elle comprend une soufflante (10) selon l'une des revendications précédentes.

9. Goupille de fixation (64) d'une plateforme inter-aubes (20) sur un disque (12) d'une soufflante (10) selon l'une des revendications 1 à 7, **caractérisée en ce qu'**elle comprend un corps (66) de forme rectiligne allongé sensiblement cylindrique qui est relié à une extrémité à une tête (68) de plus grand diamètre que celui du corps (66).

10. Goupille (64) selon la revendication 9, **caractérisée en ce qu'**elle (40) est réalisée dans un matériau léger et résistant tel que du titane ou un composite.

## Claims

1. A turbomachine fan (10) comprising a plurality of blades (16) whose roots are mounted in slots (23) at the periphery of a rotor disk (12), and inter-blade platforms (20) having radial lugs for fastening to corresponding lugs of the disk (12), between the slots (23) for mounting the blade roots, wherein each platform (20) is fastened to the disk (12) by means of a pin (64) inserted into orifices in the lugs of the platform (20) and into corresponding orifices in the lugs of the disk (12).

2. The fan as claimed in claim 1, wherein each platform (20) comprises a radial lug at each of its upstream and downstream ends.

3. The fan as claimed in claim 1 or 2, wherein each platform (20) bears axially and radially at its upstream end against an upstream lug (52) of the disk (12).

4. The fan as claimed in one of the preceding claims, wherein each platform (20) bears axially and radially at its downstream end against a lug (54) of a downstream annular side-plate (26) added and fastened to the disk (12).

5. The fan as claimed in one of the preceding claims, wherein the pin (64) is inserted from upstream into orifices (56, 58, 60, 62) in the lugs (46, 48, 52, 54) of the platform (20) and of the disk (12) and comprises at its upstream end a head (68) which is applied and clamped against an upstream lug (46) of the platform (20) by means of an upstream annular side-plate (36) added and fastened to the disk (12).

6. The fan as claimed in one of the preceding claims, wherein, in the mounted position, the pin (64) extends obliquely with respect to the axis of rotation (18) of the disk (12).

7. The fan as claimed in claim 6, wherein the pin (64) extends downstream toward the outside.

8. A turbomachine, such as an aircraft turbofan or turboprop, which comprises a fan (10) as claimed in one of the preceding claims.

9. A pin for fastening an inter-blade platform (20) to a disk (12) of a fan (10) as claimed in one of claims 1 to 7, which comprises a body (66) of substantially cylindrical elongate rectilinear shape which is joined at one end to a head (68) having a larger diameter than the body (66).

10. The pin (64) as claimed in claim 9, which is made of a strong lightweight material such as titanium or a composite.

## Patentansprüche

1. Fan (10) für eine Turbomaschine mit mehreren Schaufeln (16), deren Füße in Nuten (23) am Umfang einer Rotorscheibe (12) angebracht sind, und mit Zwischenschaufel-Plattformen (20) mit radialen Flanschen zur Befestigung an entsprechenden Flanschen der Scheibe (12) zwischen den Montagenuten (23) für die Schaufelfüße, **dadurch gekennzeichnet, dass** jede Plattform (20) mittels eines Stifts (64) an der Scheibe (12) befestigt ist, der in Öffnungen der Flansche der Plattform (20) und in entsprechende Öffnungen der Flansche der Scheibe (12) eingeführt ist.

2. Fan (10) nach Anspruch 1, **dadurch gekennzeichnet, dass** jede Plattform (20) an jedem ihrer stromaufwärts- und stromabwärts gelegenen Enden einen radialen Flansch aufweist.

3. Fan (10) nach Anspruch 1 oder 2, **dadurch gekennzeichnet, dass** jede Plattform (20) an ihrem stromaufwärts gelegenen Ende in axialer und radialer Anlage an einem stromaufwärts gelegenen Ende (52) der Scheibe (12) liegt.

4. Fan (10) nach einem der vorhergehenden Ansprüche, **dadurch gekennzeichnet, dass** jede Plattform (20) an ihrem stromabwärts gelegenen Ende in axialer und radialer Anlage an einem Flansch (54) eines ringförmigen Zwischenflansches (26) liegt, der auf die Scheibe (12) geschraubt und dort befestigt ist.

5. Fan (10) nach einem der vorhergehenden Ansprüche, **dadurch gekennzeichnet, dass** der Stift (64) von stromaufwärts in Öffnungen (56, 58, 60, 62) der Flansche (46, 48, 52, 54) der Plattform (20) und der Scheibe (12) eingefügt ist und an seinem stromaufwärts gelegenen Ende einen Kopf (68) aufweist, der mittels eines ringförmigen, stromaufwärts gelegenen Zwischenflansches (36) an einem stromaufwärts gelegenen Flansch (46) der Plattform (29) angesetzt und eingespannt ist, der auf die Scheibe (12) geschraubt und dort befestigt ist.

6. Fan (10) nach einem der vorhergehenden Ansprüche, **dadurch gekennzeichnet, dass** sich in der Montageposition der Stift (64) bezüglich der Drehachse (18) der Scheibe (12) schief erstreckt.

7. Fan (10) nach Anspruch 6, **dadurch gekennzeichnet, dass** sich der Stift (64) stromabwärts nach außen erstreckt.

8. Turbomaschine wie ein Flugzeugstrahltriebwerk oder ein Flugzeugturboproptriebwerk, **dadurch gekennzeichnet, dass** sie einen Fan (10) nach einem der vorhergehenden Ansprüche aufweist.

9. Stift (64) zur Befestigung einer Zwischenschaufel-Plattform (20) an einer Scheibe (12) eines Fans (10) nach einem der Ansprüche 1 bis 7, **dadurch gekennzeichnet, dass** er einen Körper (66) mit geradliniger, im Wesentlichen zylindrischer langgestreckter Form aufweist, der an einem Ende mit einem Kopf (68) mit größerem Durchmesser als demjenigen des Körpers (66) verbunden ist.

10. Stift (64) nach Anspruch 9, **dadurch gekennzeichnet, dass** er (40) aus einem leichten und widerstandsfähigen Material wie Titan oder einem Verbundwerkstoff hergestellt ist.
